# EUROPEAN PATENT APPLICATION

(11) **EP 4 557 637 A1**
(43) Date of publication of application: **21.05.2025**
(21) Application number: 23849056.9
(22) Date of filing: 13.06.2023
(51) Int. Cl.: H04B 10/69, H04B 10/40, H04Q 11/00

(54) **APPARATUS FOR AMPLIFYING SIGNAL, AND APPARATUS AND METHOD FOR RECEIVING OPTICAL SIGNAL**

(30) Priority: 30.07.2022 CN 202210912578
(71) Applicant: Huawei Technologies Co., Ltd., Shenzhen, Guangdong 518129 (CN)
(72) Inventor: LIN, Huafeng, Shenzhen, Guangdong 518129 (CN); LI, Yuanmou, Shenzhen, Guangdong 518129 (CN); HUANG, Lixin, Shenzhen, Guangdong 518129 (CN)
(74) Representative: Gill Jennings & Every LLP
(86) International application number: PCT/CN2023/099948
(87) International publication number: WO 2024/027346

(57) **Abstract**

This application provides a signal amplification apparatus, an optical signal receiving apparatus, and a method, to meet high-performance time-division reception of 50GPON and GPON uplink signals, and implement a requirement for coexistence of 50GPON and GPON terminal devices on a same PON interface in a system. The apparatus includes a signal receiving unit, a channel selection unit, a first amplification and data recovery channel, and a second amplification and data recovery channel. The signal receiving unit is configured to receive a first signal, and output the first signal to the channel selection unit, where the first signal includes a first-rate signal and a second-rate signal. The channel selection unit is configured to connect the signal receiving unit to at least one of the two amplification and data recovery channels, and transmit the first signal to the at least one of the two amplification and data recovery channels. The first amplification and data recovery channel and the second amplification and data recovery channel each are configured to perform amplification and data recovery on the received first signal.

## Description

This application claims priority to Chinese Patent Application No. 202210912578.9, filed with the China National Intellectual Property Administration on July 30, 2022 and entitled "SIGNAL AMPLIFICATION APPARATUS, OPTICAL SIGNAL RECEIVING APPARATUS, AND METHOD", which is incorporated herein by reference in its entirety.

### TECHNICAL FIELD

This application relates to the optical access field, and more specifically, to a signal amplification apparatus, an optical signal receiving apparatus, and a method.

### BACKGROUND

A passive optical network (passive optical network, PON) is a communication network formed by connecting an optical line terminal (optical line terminal, OLT) to a specific quantity of optical network terminals (optical network terminal, ONT) or a plurality of optical network units (optical network unit, ONU) through an optical distribution network (optical distribution network, ODN). As video services become basic services of broadband networks and PON technologies gradually develop from the home broadband field to the field of government and enterprise industry, for example, telemedicine, industrial intelligent manufacturing, and communication in factories and mines, a higher requirement is posed on a bandwidth. Currently, it is widely recognized to increase a bandwidth of a next-generation optical access network to 50 Gbps to gradually replace some 10GPON and GPON devices. Therefore, how to simply and efficiently implement smooth evolution of a system bandwidth becomes a research hotspot in the PON field.

### SUMMARY

This application provides a signal amplification apparatus, an optical signal receiving apparatus, and a method, to meet different performance requirements of both 50GPON and GPON.

According to a first aspect, an embodiment of this application provides a signal amplification apparatus. The apparatus includes a signal receiving unit, a channel selection unit, a first amplification and data recovery channel, and a second amplification and data recovery channel. The signal receiving unit is configured to receive a first signal, and output the first signal to the channel selection unit, where the first signal includes a first-rate signal and a second-rate signal. The channel selection unit is configured to connect the signal receiving unit to at least one of the first amplification and data recovery channel and the second amplification and data recovery channel, and transmit the first signal to the at least one of the first amplification and data recovery channel and the second amplification and data recovery channel. The first amplification and data recovery channel is configured to perform amplification and data recovery on the first signal transmitted to the first amplification and data recovery channel. The second amplification and data recovery channel is configured to perform amplification and data recovery on the first signal transmitted to the second amplification and data recovery channel.

For example, in embodiments of this application, the signal receiving unit may be a serial port configured to receive a signal.

For example, in embodiments of this application, the signal amplification apparatus may be an amplification apparatus, or may be a module in the amplification apparatus, or may be in a form of a chip. This is not limited in this application.

Based on the foregoing solution, the channel selection unit is connected to different amplification and data recovery channels, so that the multi-rate first signal may be transmitted to different amplification and data recovery channels. When the solution is applied to a multi-generation-coexistence PON system, first signals at different rates may be transmitted by multiplexing a same carrier. In other words, optical signals in a same band may be used on 50GPON and GPON carriers, so that a scenario in which 50GPON and GPON devices coexist in a system can be implemented without affecting system performance.

With reference to the first aspect, in some implementations of the first aspect, the signal receiving unit is specifically configured to receive the first-rate signal and the second-rate signal that arrive at different moments.

In other words, in this application, the first-rate signal and the second-rate signal in the first signal arrive at the signal receiving unit in a staggered manner according to a specific chronological.

With reference to the first aspect, in some implementations of the first aspect, the first amplification and data recovery channel is specifically configured to perform limiting amplification and data recovery on the first-rate signal. The second amplification and data recovery channel is specifically configured to perform linear amplification and data recovery on the second-rate signal.

With reference to the first aspect, in some implementations of the first aspect, the channel selection unit includes a control unit and a switching element. The control unit is configured to receive first control signaling, and control, based on the first control signaling, the switching element to connect the signal receiving unit to the first amplification and data recovery channel or the second amplification and data recovery channel. When the switching element connects the signal receiving unit to the first amplification and data recovery channel, the switching element is configured to transmit the first-rate signal to the first amplification and data recovery channel. When the switching element connects the signal receiving unit to the second amplification and data recovery channel, the switching element is configured to transmit the second-rate signal to the second amplification and data recovery channel.

Based on the foregoing solution, the first signal is transmitted to different amplification and data recovery channels through cooperation between the control unit and the switching element, so that the first signal can be amplified on an amplification and data recovery channel that rate-matches the first signal, thereby ensuring signal integrity during transmission, and further improving system performance.

With reference to the first aspect, in some implementations of the first aspect, the switching element includes a single-pole double-throw switch or a transistor.

For example, the single-pole double-throw switch is a "single-pole double-throw" high-speed electronic switch.

Channel switching for the first signal is implemented based on a common element like the single-pole double-throw switch or the transistor, so that network upgrade costs can be reduced.

With reference to the first aspect, in some implementations of the first aspect, the first control information is from a medium access control MAC.

For example, when the signal amplification apparatus is used in a receiver, because the MAC of a system may store a rate of an uplink time division multiplexing signal, the first control information is sent to the control unit based on an uplink time sequence stored in the MAC, and the channel selection unit is controlled, based on the first control information, to be connected to amplification and data recovery channels with different bandwidths, so that reliability of channel switching can be ensured, thereby ensuring stability of system performance.

With reference to the first aspect, in some implementations of the first aspect, the channel selection unit includes a mirroring module. The mirroring module is configured to mirror the first signal to obtain a second signal, and respectively transmit the first signal and the second signal to the first amplification and data recovery channel and the second amplification and data recovery channel.

Mirroring of the first signal is implemented based on a common mirroring circuit, so that network upgrade costs can be reduced. When this solution is applied to a scenario in which 50GPON and GPON coexist, even if a first signal at a specific rate is transmitted on each amplification and data recovery channel, the MAC may select, based on a time sequence, an amplification and data recovery channel that rate-matches the first signal for reception. Therefore, system performance can still be ensured.

With reference to the first aspect, in some implementations of the first aspect, the first amplification and data recovery channel is further configured to receive second control signaling, and determine an operating rate/operating bandwidth of the first amplification and data recovery channel based on the second control signaling. Alternatively, the second amplification and data recovery channel is further configured to receive second control signaling, and determine an operating rate/operating bandwidth of the second amplification and data recovery channel based on the second control signaling.

Based on this solution, an operating rate/operating bandwidth of an amplification and data recovery channel is controlled based on the second control signaling, so that one channel can correspond to a plurality of operating rates/operating bandwidths, and application requirements in different scenarios can be met based on flexible rate adjustment.

With reference to the first aspect, in some implementations of the first aspect, the second control information is from the medium access control MAC.

For example, when the signal amplification apparatus is used in a receiver, because the MAC may store a rate of an uplink time division multiplexing signal, the second control information is sent to an amplifier based on an uplink time sequence stored in the MAC, and the amplifier adjusts bandwidths of different amplification and data recovery channels based on the second control information, so that a signal-to-noise ratio existing after signal amplification can be ensured, thereby ensuring stability of system performance.

With reference to the first aspect, in some implementations of the first aspect, the apparatus includes M amplification and data recovery channels, rates of the first signal include N rates, the M amplification and data recovery channels correspond to the N rates, and each of the N rates corresponds to one of the M amplification and data recovery channels. The channel selection unit is configured to connect the signal receiving unit to an amplification and data recovery channel corresponding to a rate of the first signal. M and N are integers greater than or equal to 2.

Based on this solution, the multi-channel amplification apparatus provided in this application has a capability of performing amplification and data recovery on a multi-rate signal, so that application in a plurality of scenarios is implemented while system performance is ensured.

According to a second aspect, an embodiment of this application provides an optical signal receiving apparatus. The apparatus includes an optical signal receiving and converting unit, a channel selection unit, a first amplification and data recovery channel, and a second amplification and data recovery channel. The optical signal receiving and converting unit is configured to receive a first optical signal, convert the first optical signal into a first electrical signal, and output the first electrical signal to the channel selection unit, where the first optical signal includes a first-rate optical signal and a second-rate optical signal, the first-rate optical signal corresponds to a first-rate electrical signal, and the second-rate optical signal corresponds to a second-rate electrical signal. The channel selection unit is configured to connect the optical signal receiving and converting unit to at least one of the first amplification and data recovery channel and the second amplification and data recovery channel, and transmit the first electrical signal to the at least one of the first amplification and data recovery channel and the second amplification and data recovery channel. The first amplification and data recovery channel is configured to perform amplification and data recovery on the first electrical signal transmitted to the first amplification and data recovery channel. The second amplification and data recovery channel is configured to perform amplification and data recovery on the first electrical signal transmitted to the second amplification and data recovery channel.

For example, the optical signal receiving and converting unit may be an avalanche photodiode APD, or another element or chip configured to convert an optical signal into an electrical signal, and may convert the first optical signal into the first electrical signal by using an optical-to-electrical conversion chip.

With reference to the second aspect, in some implementations of the second aspect, the optical signal receiving and converting unit is specifically configured to receive the first-rate optical signal and the second-rate optical signal that arrive at different moments, convert the first-rate optical signal and the second-rate optical signal into the first-rate electrical signal and the second-rate electrical signal, and separately output the first-rate electrical signal and the second-rate electrical signal to the channel selection unit at different moments.

It should be understood that, in this application, a first-rate signal and a second-rate signal in the first optical signal and the first electrical signal arrive at the optical signal receivingand converting unit in a staggered manner according to a specific chronological.

With reference to the second aspect, in some implementations of the second aspect, the first amplification and data recovery channel is specifically configured to perform limiting amplification and data recovery on the first-rate electrical signal. The second amplification and data recovery channel is specifically configured to perform linear amplification and data recovery on the second-rate electrical signal.

With reference to the second aspect, in some implementations of the second aspect, the channel selection unit includes a control unit and a switching element. The control unit is configured to receive first control signaling, and control, based on the first control signaling, the switching element to connect the optical signal receiving and converting unit to the first amplification and data recovery channel or the second amplification and data recovery channel. When the switching element connects the optical signal receiving and converting unit to the first amplification and data recovery channel, the switching element is configured to transmit the first-rate electrical signal to the first amplification and data recovery channel. When the switching element connects the optical signal receiving and converting unit to the second amplification and data recovery channel, the switching element is configured to transmit the second-rate electrical signal to the second amplification and data recovery channel.

With reference to the second aspect, in some implementations of the second aspect, the switching element includes a single-pole double-throw switch or a transistor.

With reference to the second aspect, in some implementations of the second aspect, the first control information is from a medium access control MAC.

With reference to the second aspect, in some implementations of the second aspect, the channel selection unit includes a mirroring module. The mirroring module is configured to mirror the first electrical signal to obtain a second electrical signal, and respectively transmit the first electrical signal and the second electrical signal to the first amplification and data recovery channel and the second amplification and data recovery channel.

With reference to the second aspect, in some implementations of the second aspect, the first amplification and data recovery channel is further configured to receive second control signaling, and determine an operating rate/operating bandwidth of the first amplification and data recovery channel based on the second control signaling. Alternatively, the second amplification and data recovery channel is further configured to receive second control signaling, and determine an operating rate/operating bandwidth of the second amplification and data recovery channel based on the second control signaling.

With reference to the second aspect, in some implementations of the second aspect, the second control information is from the medium access control MAC.

With reference to the second aspect, in some implementations of the second aspect, the apparatus includes M amplification and data recovery channels, the first optical signal or the first electrical signal includes signals at N rates, the M amplification and data recovery channels correspond to the signals at the N rates, a signal at each of the N rates corresponds to one of the M amplification and data recovery channels, and the M amplification and data recovery channels include a limiting amplification and data recovery channel and a linear amplification and data recovery channel. The channel selection unit is configured to connect the optical signal receiving and converting unit to an amplification and data recovery channel corresponding to a rate of the first electrical signal. M and N are integers greater than or equal to 2.

According to a third aspect, an embodiment of this application provides a signal amplification method. The method includes: receiving a first signal, where the first signal includes a first-rate signal and a second-rate signal; transmitting the first signal to at least one of a first amplification and data recovery channel and a second amplification and data recovery channel; performing, by the first amplification and data recovery channel, amplification and data recovery on the first signal when the first signal is transmitted to the first amplification and data recovery channel; and performing, by the second amplification and data recovery channel, amplification and data recovery on the first signal when the first signal is transmitted to the second amplification and data recovery channel.

With reference to the third aspect, in some implementations of the third aspect, the receiving a first signal includes: receiving the first-rate signal and the second-rate signal that are at different moments.

With reference to the third aspect, in some implementations of the third aspect, the performing, by the first amplification and data recovery channel, amplification and data recovery on the first signal includes: performing, by the first amplification and data recovery channel, limiting amplification and data recovery on the first signal. The performing, by the second amplification and data recovery channel, amplification and data recovery on the first signal includes: performing, by the second amplification and data recovery channel, linear amplification and data recovery on the first signal.

With reference to the third aspect, in some implementations of the third aspect, the method further includes: receiving first control signaling; and transmitting the first signal to the first amplification and data recovery channel or the second amplification and data recovery channel based on the first control signaling.

With reference to the third aspect, in some implementations of the third aspect, the first control information is from a medium access control MAC.

With reference to the third aspect, in some implementations of the third aspect, the method further includes: mirroring the first signal to obtain a second signal; and respectively transmitting the first signal and the second signal to the first amplification and data recovery channel and the second amplification and data recovery channel.

With reference to the third aspect, in some implementations of the third aspect, the method further includes: receiving second control signaling; and determining an operating rate/operating bandwidth of the first amplification and data recovery channel or the second amplification and data recovery channel based on the second control signaling.

With reference to the third aspect, in some implementations of the third aspect, the second control information is from the medium access control MAC.

With reference to the third aspect, in some implementations of the third aspect, rates of the first signal include N rates, the N rates correspond to M amplification and data recovery channels, each of the N rates corresponds to one of the M channels, and M and N are integers greater than or equal to 2. The first signal is transmitted to a channel corresponding to a rate of the first signal.

According to a fourth aspect, an embodiment of this application provides a passive optical network system. The system includes an optical line terminal OLT and a plurality of optical network units ONUs, the OLT and the ONUs communicate through at least one downlink wavelength channel and one uplink wavelength channel, the uplink wavelength channel is used to transmit a first signal, and the OLT is configured to perform the method provided in any one of the third aspect or the implementations of the third aspect.

It should be understood that the uplink wavelength channel transmits optical signals that include at least two different rates and that are staggered in time dimension.

According to a fifth aspect, an embodiment of this application provides a chip. The chip includes a processor and an optical signal receiving apparatus, the optical signal receiving apparatus is configured to receive a first signal and transmit the first signal to the processor, and the processor is configured to perform the method provided in any one of the third aspect or the implementations of the third aspect.

According to a sixth aspect, an embodiment of this application provides a communication apparatus. The apparatus is configured to perform the method provided in the third aspect. Specifically, the communication apparatus may include a unit and/or a module, for example, a processing module and a transceiver module, configured to perform the method provided in any one of the third aspect or the implementations of the third aspect.

In an implementation, the communication apparatus may include a unit and/or a module configured to perform the method provided in any one of the third aspect or the implementations of the third aspect, and is a receiving device. The transceiver module may be a transceiver or an input/output interface. The processing module may be at least one processor. Optionally, the transceiver may be a transceiver circuit. Optionally, the input/output interface may be an input/output circuit.

In another implementation, the communication apparatus is a chip, a chip system, or a circuit in a receiving device. The transceiver module may be an input/output interface, an interface circuit, an output circuit, an input circuit, a pin, a related circuit, or the like on the chip, the chip system, or the circuit. The processing module may be at least one processor, a processing circuit, a logic circuit, or the like.

According to a seventh aspect, an embodiment of this application provides a processor, configured to perform the method provided in the third aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, an embodiment of this application provides a computer-readable storage medium. The computer-readable storage medium stores program code to be executed by a device, and the program code is used to perform the method provided in any one of the third aspect and the implementations of the third aspect.

According to a ninth aspect, an embodiment of this application provides a computer program product including instructions. When the computer program product runs on a computer, the computer is enabled to perform the method provided in any one of the third aspect and the implementations of the third aspect.

According to a tenth aspect, an embodiment of this application provides a chip. The chip includes a processor and a communication interface. The processor reads, through the communication interface, instructions stored in a memory, to perform the method provided in any one of the third aspect and the implementations of the third aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method provided in any one of the third aspect and the implementations of the third aspect.

For specific beneficial effects brought by the second aspect and the tenth aspect, refer to descriptions of the beneficial effects in the first aspect. Details are not described herein again.

### BRIEF DESCRIPTION OF DRAWINGS

FIG. 1 is a diagram of an architecture of a PON system to which an embodiment of this application is applicable;
FIG. 2 is a diagram of a structure of a signal amplification apparatus according to an embodiment of this application;
FIG. 3 is a diagram of a structure of a first signal amplification apparatus 200 according to an embodiment of this application;
FIG. 4 is a diagram of a structure of a second signal amplification apparatus 200 according to an embodiment of this application;
FIG. 5 is a diagram of a structure of a first signal amplification apparatus 300 according to an embodiment of this application;
FIG. 6 is a diagram of a structure of a second signal amplification apparatus 300 according to an embodiment of this application;
FIG. 7 is a schematic flowchart of a signal amplification method 700 according to an embodiment of this application;
FIG. 8 is a schematic flowchart of a signal amplification method 800 according to an embodiment of this application;
FIG. 9 is a schematic flowchart of a signal amplification method 900 according to an embodiment of this application;
FIG. 10 is a diagram of a structure of an optical signal receiving apparatus 1000 according to an embodiment of this application;
FIG. 11 is a diagram of a structure of an optical signal receiving apparatus 1001 according to an embodiment of this application;
FIG. 12 is a diagram of a structure of an optical signal receiving apparatus 1002 according to an embodiment of this application; and
FIG. 13 is a diagram of a structure of a communication apparatus according to an embodiment of this application.

### DESCRIPTION OF EMBODIMENTS

The following describes technical solutions of this application with reference to accompanying drawings.
1. In the following text descriptions or accompanying drawings in embodiments of this application, terms such as "first" and "second" and various numbers are merely used for differentiation for ease of description, but do not necessarily describe a specific order or sequence, and are not intended to limit the scope of embodiments of this application. For example, in embodiments of this application, the terms and various numbers are used to distinguish between different uplink signals or control signaling.
2. In the following embodiments of this application, terms such as "include", "have", and any variants thereof mean to cover non-exclusive inclusion. For example, a process, method, system, product, or device that includes a series of steps or units is not necessarily limited to those steps or units that are expressly listed, but may include another step or unit not expressly listed or inherent to such a process, method, product, or device.
3. In embodiments of this application, terms such as "example" or "for example" are used to represent giving an example, an illustration, or a description. Any embodiment or design scheme described with "example" or "for example" should not be explained as being more preferred or having more advantages than another embodiment or design scheme. The words such as "example" or "for example" are used to present a related concept in a specific manner for ease of understanding.
4. In this application, "indicate" may include "directly indicate" and "indirectly indicate". When a piece of information is described as indicating A, the information may directly indicate A or indirectly indicate A, but it does not mean that the information necessarily carries A.
5. In the accompanying drawings of this application, the accompanying drawings are merely examples and are not drawn strictly according to a scale. Specifically, a shape of a single-pole double-throw switch shown in the accompanying drawings is shown in a manner of an embodiment. Moreover, for ease of description, the shape has been slightly exaggerated.

A PON technology is a broadband access technology based on a passive ODN network. In the technology, a point-to-multipoint (point 2 multiple point, P2MP) topology is used, wavelengths in uplink and downlink transmission are independent, and time division multiplexing is performed on data. In a PON system, an ODN network that connects an OLT and an ONU uses a pure optical medium, which is passive throughout the process, has strong environment adaptability, and is easy to expand and upgrade. Due to comparative advantages in fiber-based, passive, P2MP, and the like relative to copper line access, the PON technology achieves a great success, and is deployed on a large scale. In addition, as broadband networks become increasingly prominent as basic platforms for economic and social development, internet video applications are rapidly popularized, and high-bandwidth services such as 4K/8K high definition, home cloud, and video calls are continuously developed, GPON devices are deployed on a large scale. Currently, deployment of 10GPON devices tends to rapidly rise year by year. However, as video services become basic services of broadband networks and PON technologies gradually develop from the home broadband field to the field of government and enterprise industry, for example, telemedicine, industrial intelligent manufacturing, and communication in factories and mines, a higher requirement is posed on a bandwidth. Therefore, research on a 50GPON technology with a higher bandwidth is in full swing. In the future, 50GPON devices are expected to be used in various scenarios on a large scale.

Due to large-scale deployment of GPON devices and 10GPON devices, it is foreseeable that GPON, 10GPON, and 50GPON devices coexist in one ODN scenario within a specific period of time.

During network evolution, operators have always focused on making full use of live network resources and reducing upgrade and evolution costs. Currently, during smooth evolution from GPON to 10GPON, the most effective method that has been verified currently is to use, on a center office device, an integrated optical transceiver module with coexistence of a plurality of standards. For example, a combo PON (that is, Combo PON) concept is used to implement multiplexing of GPON and 10GPON. A main idea of this solution is to modulate GPON and 10GPON signals on carriers with different wavelengths, and then use a wavelength division multiplexing (wavelength division multiplexing, WDM) multiplexer to combine light with different optical wavelengths into one optical fiber for transmission. After a multiplexed signal is received, a wavelength division multiplexing demultiplexer (demultiplexer) demultiplexes optical signals with a plurality of wavelengths in the optical fiber to different receivers based on the different optical wavelengths. In this solution, for different rates, receivers corresponding to the rates are used. To be specific, an avalanche photodiode (avalanche photodiode, APD) and a trans-impedance amplifier (trans-impedance amplifier, TIA) corresponding to GPON are used during reception in GPON, and an APD and a TIA corresponding to 10GPON are used during reception in 10GPON. In this way, it can be ensured that reception performance at each rate is optimal.

However, difficulty in implementing GPON, 10GPON, and 50GPON on optical components by using the combo PON solution cannot be ignored. First, the technical difficulty is high. Compared with uplink bandwidths in GPON and 10GPON, an available band in 50GPON is narrow. For a scenario in which 50GPON does not coexist with GPON or 10GPON in the future, the narrow band cannot meet a use requirement of a 50GPON system. In addition, the narrow band causes an excessively small wavelength division spacing when an OLT device in a center office receives a signal and performs wavelength division demultiplexing. As a result, a requirement for mounting precision of a passive component is extremely high, and manufacturing is difficult. In addition, due to three-generation coexistence, compared with that in current XGS Combo, an optical module is longer. If all electrical chips are integrated, manufacturing of the optical module faces a great challenge. In addition, a layout of a communication interface of an optical receiver and a multi-generation compatibility solution also bring many problems. Further, three-generation coexistence further causes an increase in costs, for example, manufacturing costs of the optical module and cooling and packaging costs of an ONT.

Therefore, the existing coexistence solution cannot implement a requirement for smooth evolution to 50GPON.

In view of this, embodiments of this application provide a signal amplification method, a communication apparatus, and a passive optical network system. Based on the signal amplification method provided in this application, the foregoing technical problem and cost problem that are caused due to use of WDM during coexistence with 50GPON can be resolved. In this application, 50GPON and GPON coexist in a time division multiplexing manner, optical carriers in a same wavelength range are used, and a same photodetector (APD) is used. A unique TIA (which separately outputs GPON and 50G-PON signals) is designed, and a serial-to-parallel conversion interface of medium access control (medium access control, MAC) is used to choose to receive a GPON or 50G-PON signal at a specific moment. According to the solution provided in this application, deployment space of a center office device can be saved, and energy consumption of an optical access device can be reduced, so that network construction costs of an operator can be reduced while ODN resources of a live network are effectively used.

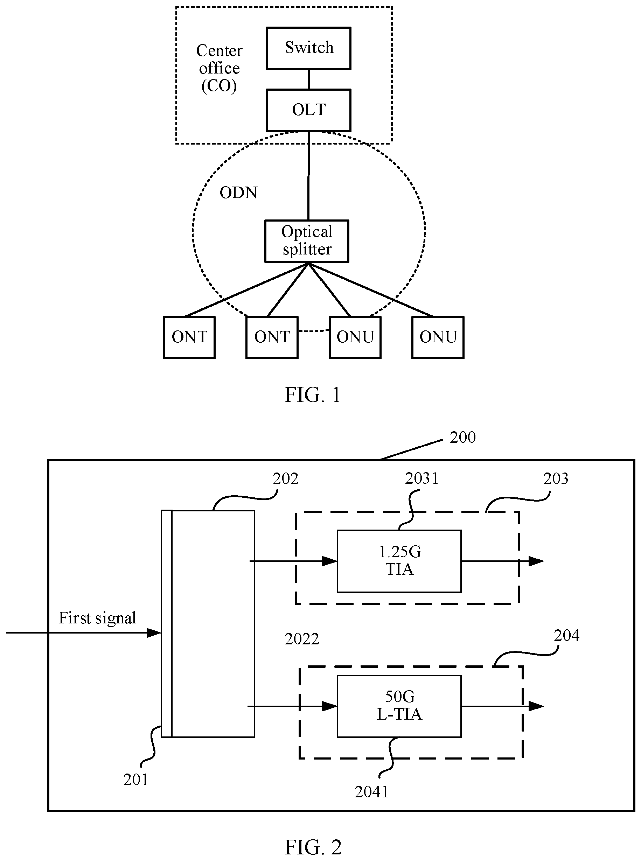

Embodiments of this application are applied to a PON system. FIG. 1 is a diagram of an architecture of a PON system to which an embodiment of this application is applicable. A PON technology is a point-to-multipoint fiber access technology. The PON system includes an OLT device, an ODN device, and at least one ONU device. The OLT device is connected to the ODN device, and the ODN device is connected to a plurality of ONU devices. The OLT device provides a network-side interface. The OLT device is connected to an upper-layer network-side device (for example, a switch or a router) and one or more lower-layer ODN devices.

Generally, the OLT device is usually located in a center office (center office, CO), and the ONU device is located at or near a user's home. The ONU device provides a user-side interface, and is connected to the ODN device. If the ONU also provides a user interface function, for example, provides an Ethernet user interface or a plain old telephone service (plain old telephone service, POTS) user interface, the ONU is referred to as an optical network terminal (optical network terminal, ONT).

The ODN device includes a passive optical splitter used for optical power distribution, a feeder fiber connected between the passive optical splitter and the OLT, and a distribution fiber connected between the passive optical splitter and the ONU device. During downlink data transmission, the ODN device transmits downlink data of the OLT device to each ONU device through the optical splitter. Similarly, during uplink data transmission, the ODN device aggregates uplink data of the ONU device and then transmits the aggregated uplink data to the OLT device.

It should be noted that a signal amplification apparatus provided in this application is located in an OLT device in a center office, for example, may be integrated into an optical module in the OLT device as a functional feature. A form of the signal amplification apparatus is not limited in this application.

FIG. 2 is a diagram of a structure of a signal amplification apparatus 200 according to an embodiment of this application. The apparatus 200 includes a signal receiving unit 201, a channel selection unit 202, a first amplification and data recovery channel 203, and a second amplification and data recovery channel 204. Specifically, the signal receiving unit 201 is configured to receive a first signal, and output the first signal to the channel selection unit 202, where the first signal includes a first-rate signal and a second-rate signal. The first-rate signal and the second-rate signal arrive at the signal receiving unit 201 in a staggered manner according to a specific chronological. The channel selection unit 202 is configured to connect the signal receiving unit 201 to at least one of the first amplification and data recovery channel 203 and the second amplification and data recovery channel 204, and transmit the first signal to the at least one of the first amplification and data recovery channel 203 and the second amplification and data recovery channel 204. The first amplification and data recovery channel 203 is configured to perform amplification and data recovery on the first signal transmitted to the first amplification and data recovery channel 203. The second amplification and data recovery channel 204 is configured to perform amplification and data recovery on the first signal transmitted to the second amplification and data recovery channel 204. For example, the first amplification and data recovery channel 203 corresponds to a first rate, and the second amplification and data recovery channel 204 corresponds to a second rate. As shown in FIG. 2, the first rate may be 1.25 Gbps, and the second rate may be 50 Gbps. Specifically, after the first signal is transmitted to the first amplification and data recovery channel 203, a first amplifier 2031 (which is a limiting trans-impedance amplifier with an operating bandwidth of 1.25 Gbps) located on the first amplification and data recovery channel 203 performs limiting amplification and data recovery on the first signal. After the first signal is transmitted to the second amplification and data recovery channel 204, a second amplifier 2041 (which is a linear trans-impedance amplifier with a bandwidth of 50 Gbps) on the second amplification and data recovery channel performs linear amplification and data recovery on the first signal.

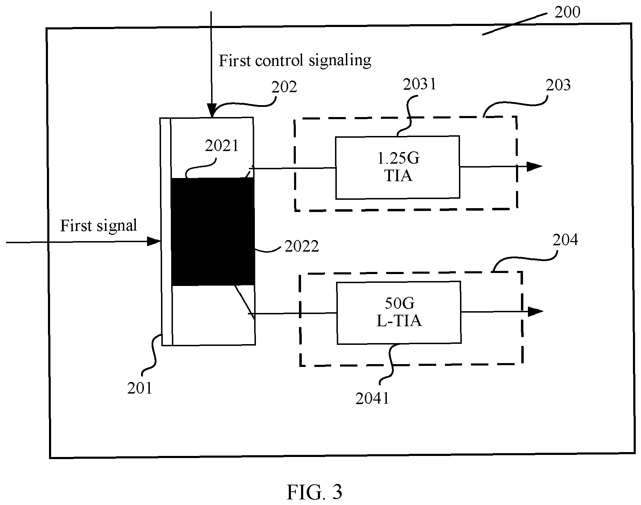

**In** an implementation, the channel selection unit 202 includes a control unit 2021 and a switching element 2022. In this case, the signal amplification apparatus 200 is shown in FIG. 3. The control unit 2021 is configured to receive first control signaling, and control, based on the first control signaling, the switching element 2022 to connect the signal receiving unit 201 to the first amplification and data recovery channel 203 or the second amplification and data recovery channel 204. When the switching element 2022 connects the signal receiving unit 201 to the first amplification and data recovery channel 203, the switching element 2022 is configured to transmit the first-rate signal to the first amplification and data recovery channel 203. When the switching element 2022 connects the signal receiving unit 201 to the second amplification and data recovery channel 204, the switching element 2022 is configured to transmit the second-rate signal to the second amplification and data recovery channel 204.

Optionally, the switching element 2022 may be a single-pole double-throw switch, a transistor, or another element that can implement link switching. It should be understood that in FIG. 3, the switching element 2022 is described as a single-pole double-throw switch.

Specifically, as shown in FIG. 3, the first amplifier 2031 is a trans-impedance amplifier with a bandwidth of 1.25 Gbps, and the second amplifier 2041 is a trans-impedance amplifier with a bandwidth of 50 Gbps. When a rate of the first-rate signal received by the signal receiving unit 201 is 1.25 Gbps, the first control signaling received by the control unit 2021 indicates the control unit 2021 to control the switching element 2022 to connect the signal receiving unit 201 to the first amplification and data recovery channel 203. In this case, the first-rate signal at a rate of 1.25 Gbps is transmitted to the first amplification and data recovery channel 203 through the switching element 2022, and amplification and data recovery are performed on the first-rate signal by using the first amplifier 2031 located on the first amplification and data recovery channel 203. When a rate of the second-rate signal received by the signal receiving unit 201 is 50 Gbps, the first control signaling received by the control unit 2021 indicates the control unit 2021 to control the switching element 2022 to connect the signal receiving unit 201 to the second amplification and data recovery channel 204. In this case, the second-rate signal at the rate of 50 Gbps is transmitted to the second amplification and data recovery channel 204 through the switching element 2022, and amplification and data recovery are performed on the second-rate signal by using the second amplifier 2041 located on the second amplification and data recovery channel 204.

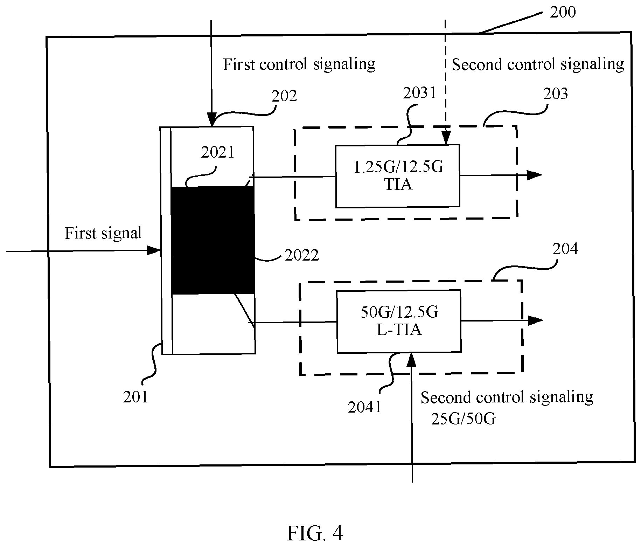

In another implementation, as shown in FIG. 4, if a rate of the first signal received by the signal receiving unit 201 is 12.5 Gbps, in the amplification apparatus 200 provided in this embodiment of this application, the first control signaling received by the control unit 2021 may indicate the control unit 2021 to control the switching element 2022 to connect the signal receiving unit 201 to the first amplification and data recovery channel 203. In this case, the first signal at the rate of 12.5 Gbps is transmitted to the first amplification and data recovery channel 203 through the switching element 2022, and amplification and data recovery are performed on the first signal by using the first amplifier 2031 located on the first amplification and data recovery channel 203. Alternatively, the first control signaling received by the control unit 2021 may indicate the control unit 2021 to control the switching element 2022 to connect the signal receiving unit 201 to the second amplification and data recovery channel 204. In this case, the first signal at the rate of 12.5 Gbps is transmitted to the second amplification and data recovery channel 204 through the switching element 2022, and amplification and data recovery are performed on the first signal by using the second amplifier 2041 located on the second amplification and data recovery channel 204.

In another implementation, when a rate of the first signal received by the signal receiving unit 201 is 25 Gbps, the first control signaling received by the control unit 2021 indicates the control unit 2021 to control the switching element 2022 to connect the signal receiving unit 201 to the second amplification and data recovery channel 204. In this case, the second amplifier 2041 on the second amplification and data recovery channel 204 is further configured to receive second control signaling. The second control signaling indicates the second amplifier 2041 to decrease a bandwidth of 50G, and preferably, may indicate the second amplifier 2041 to adjust the bandwidth to 25G. In this scenario, the first signal at the rate of 25 Gbps is transmitted to the second amplification and data recovery channel 204 through the switching element 2022, and amplification and data recovery are performed on the first signal by using the second amplifier 2041 located on the second amplification and data recovery channel 204.

It should be understood that, for the first signal whose rate is measured by Gbps, the first control signaling may be used to transmit the first signal within such a rate range to the first amplification and data recovery channel 203, and a bandwidth of the first amplifier 2031 located on the first amplification and data recovery channel 203 is adjusted with reference to the second control signaling.

Adjusting the bandwidth of the amplifier based on the second signaling helps improve a signal-to-noise ratio existing after signal amplification, implement flexible signal amplification, and further improve communication quality.

It should be understood that, for the signal amplification apparatus 200 provided in this embodiment of this application, when amplification and data recovery are performed on a first signal received each time, the first control signaling and the second control signaling are not received along with the first signal at the same time. For example, when the first-rate signal received at a first moment is at a magnitude of 10 Gbps, for example, 25 Gbps, if the second-rate signal received at a second moment after the first moment is at the same magnitude, for example, 50 Gbps, in this case, switching the first control signaling is not needed. In other words, for a receiving apparatus (for example, a receiver) that uses the signal amplification apparatus 200 provided in this application, when a signal is received in a time division multiplexing manner, corresponding control may be performed at a transmitting end. For example, a signal corresponding to a rate of the first amplification and data recovery channel 203 is first sent, and then a signal corresponding to a rate of the second amplification and data recovery channel 204 is sent. In this case, for the receiver, an application scenario in which the first control signaling is received only once and the switching element 2022 is adjusted once during reception can be implemented, so that signal amplification efficiency can be greatly improved, and system performance can be further improved.

In addition, when the signal amplification apparatus 200 receives the first control signaling and the second control signaling, there may be no specific sequence for receiving the control signaling. Preferably, the first control signaling and the second control signaling are received synchronously.

It should be further noted that, in embodiments of this application, both the first control signaling and the second control signaling may be instructions from a system, for example, a control and processing center like a MAC of the system. In this way, the system can control, at different moments based on different rates of arriving uplink signals, the signals to be transmitted to different amplification and data recovery channels, and receive the signals on the corresponding amplification and data recovery channels.

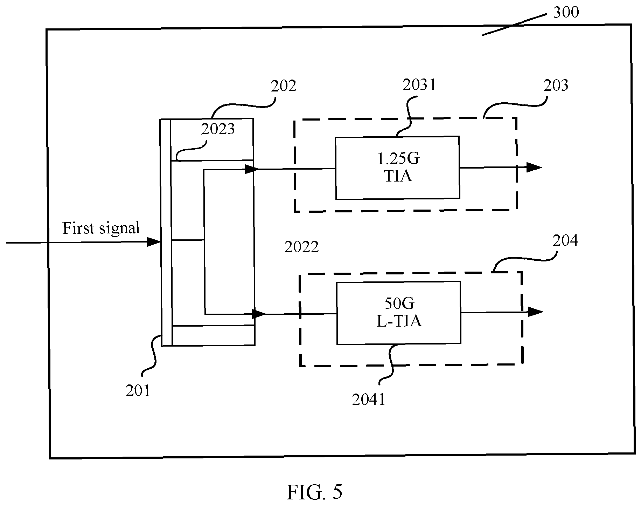

In another implementation, the channel selection unit 202 includes a mirroring module 2023. FIG. 5 is a diagram of a structure of a first signal amplification apparatus 300 according to an embodiment of this application. The mirroring module 2023 is configured to mirror the first signal to obtain a second signal, and respectively transmit the first signal and the second signal to the first amplification and data recovery channel 203 and the second amplification and data recovery channel 204. Optionally, the mirroring module 2023 may be a mirroring circuit, for example, a circuit including an element like a current mirror. For implementation of the mirroring circuit, refer to related technical descriptions. Details are not described herein again.

Specifically, as shown in FIG. 5, the first amplifier 2031 is a trans-impedance amplifier with a bandwidth of 1.25 Gbps, and the second amplifier 2041 is a trans-impedance amplifier with a bandwidth of 50 Gbps. When the rate of the first signal received by the signal receiving unit 201 is 1.25 Gbps, the mirroring module 2023 mirrors the first signal received from the signal receiving unit to generate the second signal, transmits the first signal to the first amplification and data recovery channel 203, and transmits the second signal to the second amplification and data recovery channel 204. Amplification and data recovery are performed on the first signal by using the first amplifier 2031 located on the first amplification and data recovery channel 203, and amplification and data recovery are performed on the second signal by using the second amplifier 2041 located on the second amplification and data recovery channel 204. It should be understood that, because a rate of the second signal is the same as the rate of the first signal, that is, 1.25 Gbps, after amplification and data recovery are performed on the second signal by using the second amplifier 2041, a signal-to-noise ratio is significantly reduced, and filtering may be performed by using a filtering element or the like located on the second amplification and data recovery channel 204, so that the second signal is not received.

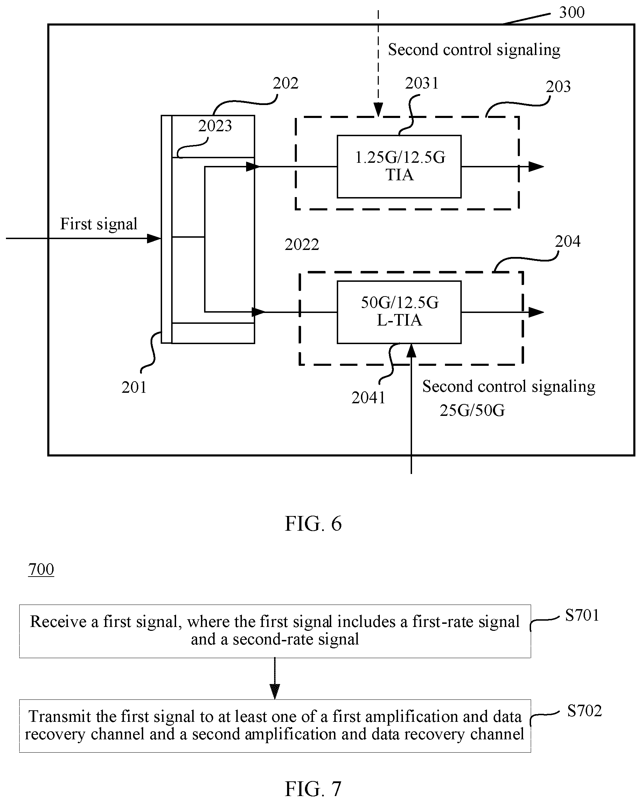

Optionally, as shown in FIG. 6, when the rate of the first signal received by the signal receiving unit 201 is 12.5 Gbps, amplification and data recovery may be performed on the first signal by using any one of the first amplification and data recovery channel 203 and the second amplification and data recovery channel 204.

When the rate of the first signal received by the signal receiving unit 201 is 25 Gbps, in an implementation, the second amplifier 2041 on the second amplification and data recovery channel 204 may receive the second control signaling, and adjust, based on the second control signaling, a bandwidth of the second amplifier 2041 to decrease. Preferably, the second signaling indicates the second amplifier 2041 to decrease the bandwidth to 25G, so that a signal-to-noise ratio of the 25-Gbps first signal that passes through the second amplifier 2041 is improved.

It should be noted that, when the signal amplification apparatus is shown in FIG. 5 or FIG. 6, the signal amplification apparatus 300 provided in this embodiment of this application may further include a third amplifier 205. The amplifier 205 is configured to perform amplification and data recovery on the first signal, so that strength of the first signal is increased, to ensure a transmission requirement in a system.

It should be further noted that, in embodiments of this application, both the first control signaling and the second control signaling may be instructions from a system, for example, a control and processing center like a MAC of the system. In this way, the system can receive, on corresponding amplification and data recovery channels at different moments based on different rates of arriving uplink signals, the signals that arrive at the moments.

In addition, the amplification apparatus provided in embodiments of this application may further include another amplification and data recovery channel, configured to perform amplification and data recovery on a multi-rate signal. For example, the amplification apparatus provided in embodiments of this application includes M amplification and data recovery channels, rates of the first signal include N rates, the M amplification and data recovery channels correspond to the N rates, and each of the N rates corresponds to one of the M amplification and data recovery channels. Each of the M amplification and data recovery channels is configured to perform amplification and data recovery for a rate corresponding to the channel, and N signals at the N rates are sequentially received by the apparatus 200 or 300 in a time division multiplexing manner. For this process, refer to the foregoing related descriptions of the first amplification and data recovery channel or the second amplification and data recovery channel. Details are not described herein again.

The foregoing describes the signal amplification apparatus provided in embodiments of this application with reference to FIG. 2 to FIG. 6. The following describes a signal amplification method provided in this application.

FIG. 7 is a schematic flowchart of a signal amplification method 700 according to an embodiment of this application. The method includes the following plurality of steps. The method may be implemented by the signal amplification apparatus 200 or 300 shown in FIG. 2 to FIG. 6, or may be performed by a component (for example, a chip or a chip system) of the signal amplification apparatus 200 or 300. For ease of description, only the apparatus 200 shown in FIG. 2 is used as an example for description herein.

S701: Receive a first signal, where the first signal includes a first-rate signal and a second-rate signal.

Specifically, in the signal amplification apparatus 200, the signal receiving unit 201 is configured to receive the first signal, where the first signal includes the first-rate signal and the second-rate signal. The first-rate signal and the second-rate signal arrive at the signal receiving unit 201 in a staggered manner according to a specific chronological.

It should be understood that, in embodiments of this application, the first signal may further include a signal at another rate, that is, the first signal includes signals at a plurality of rates, and all these signals are transmitted to the signal receiving unit 201 in a time division multiplexing form.

S702: Transmit the first signal to at least one of a first amplification and data recovery channel and a second amplification and data recovery channel.

Specifically, in the apparatus 200, the channel selection unit 202 is configured to transmit the first signal to at least one of the first amplification and data recovery channel 203 and the second amplification and data recovery channel 204. When the first signal is transmitted to the first amplification and data recovery channel 203, the first amplification and data recovery channel 203 performs amplification and data recovery on the first signal. When the first signal is transmitted to the second amplification and data recovery channel 204, the second amplification and data recovery channel 204 performs amplification and data recovery on the first signal.

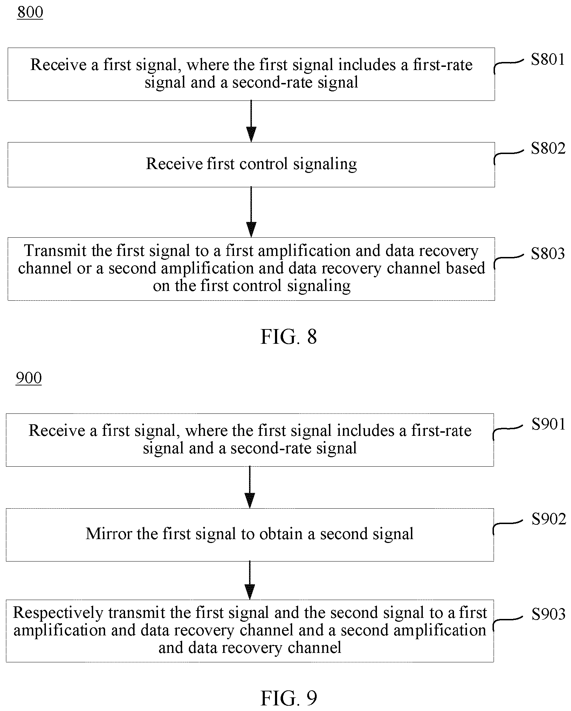

FIG. 8 is a schematic flowchart of a signal amplification method 800 according to an embodiment of this application. The method includes the following plurality of steps. The method may be implemented by the signal amplification apparatus 200 shown in FIG. 3 or FIG. 4, or may be performed by a component (for example, a chip or a chip system) of the signal amplification apparatus 200. For ease of description, only the apparatus 200 shown in FIG. 3 is used as an example for description herein.

S801: Receive a first signal, where the first signal includes a first-rate signal and a second-rate signal.

Specifically, in the signal amplification apparatus 200, the signal receiving unit 201 is configured to receive the first signal, where the first signal includes the first-rate signal and the second-rate signal. The first-rate signal and the second-rate signal arrive at the signal receiving unit 201 in a staggered manner according to a specific chronological.

Similarly, the first signal may further include a signal at another rate, that is, the first signal includes signals at a plurality of rates, and all these signals are transmitted to the signal receiving unit 201 in a time division multiplexing form.

S802: Receive first control signaling.

Specifically, the control unit 2021 receives the first control signaling, where the first control signaling indicates to transmit the first signal to a first amplification and data recovery channel or a second amplification and data recovery channel.

S803: Transmit the first signal to the first amplification and data recovery channel or the second amplification and data recovery channel based on the first control signaling.

Specifically, the control unit 2021 controls, based on the first control signaling, the switching element 2022 to connect the signal receiving unit 201 to the first amplification and data recovery channel 203 or the second amplification and data recovery channel 204. For example, when an operating rate/operating bandwidth of the first amplification and data recovery channel 203 corresponds to a first rate, after receiving the first-rate signal, the control unit 2021 controls, based on the first control signaling, the switching element 2022 to connect the signal receiving unit 201 to the first amplification and data recovery channel 203, so that the first amplification and data recovery channel 203 performs amplification and data recovery on the first-rate signal. When an operating rate/operating bandwidth of the second amplification and data recovery channel 204 corresponds to a second rate, after receiving the second-rate signal, the control unit 2021 controls, based on the first control signaling, the switching element 2022 to connect the signal receiving unit 201 to the second amplification and data recovery channel 204, so that the second amplification and data recovery channel 204 performs amplification and data recovery on the second-rate signal.

FIG. 9 is a schematic flowchart of a signal amplification method 900 according to an embodiment of this application. The method includes the following plurality of steps. The method may be implemented by the signal amplification apparatus 300 shown in FIG. 5 or FIG. 6, or may be performed by a component (for example, a chip or a chip system) of the signal amplification apparatus 300. For ease of description, only the apparatus 300 shown in FIG. 5 is used as an example for description herein.

S901: Receive a first signal, where rates of the first signal include a first rate and a second rate.

Specifically, in the signal amplification apparatus 300, the signal receiving unit 201 is configured to receive the first signal, where the rates of the first signal include the first rate and the second rate.

Similarly, the rates of the first signal may include another rate, that is, the first signal is a multi-rate signal.

S902: Mirror the first signal to obtain a second signal.

Specifically, the mirroring module 2023 mirrors the first signal to obtain the second signal.

S903: Respectively transmit the first signal and the second signal to a first amplification and data recovery channel and a second amplification and data recovery channel.

Specifically, after mirroring the first signal to obtain the second signal, the mirroring module 2023 respectively transmits the first signal and the second signal to the first amplification and data recovery channel and the second amplification and data recovery channel, so that the second amplification and data recovery channel 204 performs amplification and data recovery on the second signal while the first amplification and data recovery channel 203 performs amplification and data recovery on the first signal.

It should be noted that sequence numbers of the foregoing processes do not mean a sequence of execution. The sequence of execution of the processes should be determined according to functions and internal logic of the processes, and should not constitute any limitation on an implementation process of embodiments of this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

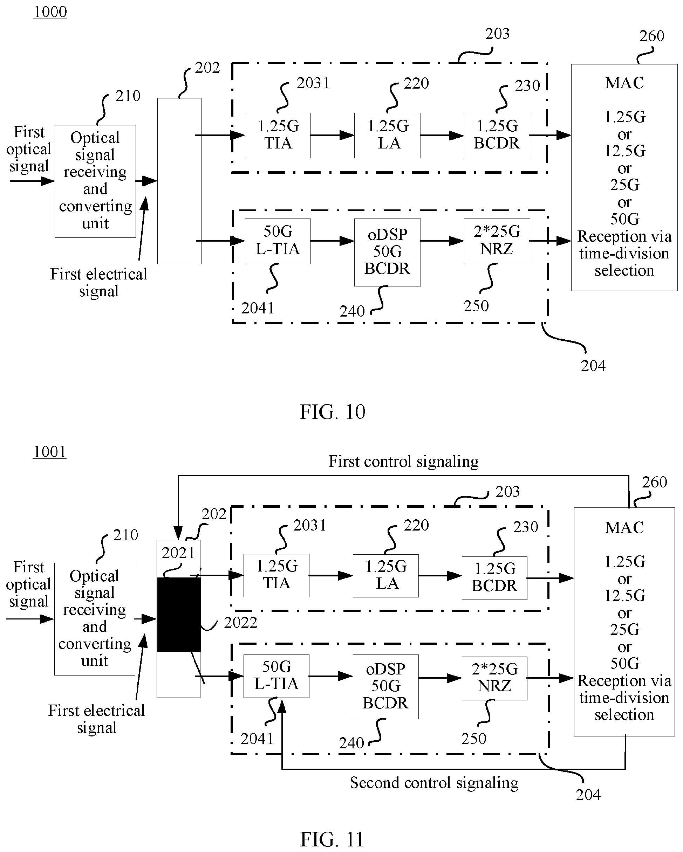

FIG. 10 is a diagram of a structure of an optical signal receiving apparatus 1000 according to an embodiment of this application. The optical signal receiving apparatus 1000 is a receiver or an amplification module in a receiver, for example, may be an OLT device arranged in a PON system. As shown in FIG. 10, the optical signal receiving apparatus 1000 includes an optical signal receiving and converting unit 210, a channel selection unit 202, a first amplification and data recovery channel 203, and a second amplification and data recovery channel 204. The optical signal receiving and converting unit 210 is configured to receive a first optical signal, convert the first optical signal into a first electrical signal, and output the first electrical signal to the channel selection unit 202, where the first optical signal includes a first-rate optical signal and a second-rate optical signal, the first-rate optical signal corresponds to a first-rate electrical signal, and the second-rate optical signal corresponds to a second-rate electrical signal. The channel selection unit 202 is configured to connect the optical signal receiving and converting unit 210 to at least one of the first amplification and data recovery channel 203 and the second amplification and data recovery channel 204, and transmit the first electrical signal to the at least one of the first amplification and data recovery channel 203 and the second amplification and data recovery channel 204. The first amplification and data recovery channel 203 is configured to perform amplification and data recovery on the first electrical signal transmitted to the first amplification and data recovery channel 203. The second amplification and data recovery channel 204 is configured to perform amplification and data recovery on the first electrical signal transmitted to the second amplification and data recovery channel 204.

Specifically, in FIG. 10, an operating rate/operating bandwidth of the first amplification and data recovery channel 203 corresponds to 1.25G, and an operating rate/operating bandwidth of the second amplification and data recovery channel 204 corresponds to 50G.

In an implementation, when a rate of the first-rate signal is 1.25 Gbps, after amplification and data recovery are performed on the first-rate signal by using a first amplifier 2031, the first-rate signal is transmitted to a line amplifier (line amplifier, LA) or a limiting amplifier (limiting amplifier, LA) 220 for amplification again, enters a burst clock and data recovery (burst clock and data recovery, BCDR) 230 for decision and data recovery, and then is received by a MAC 260. When the second-rate signal is 50 Gbps, after being amplified by a second amplifier 2041, the second-rate signal is transmitted to a 50G optical digital signal processing (optical digital signal processing, oDSP) and BCDR decision module 240 for digital processing and data recovery, is output to a 2*25G non-return-to-zero (non-return-to-zero, NRZ) coding module 250 for coding, and then is received by the MAC 260.

For example, the optical signal receiving and converting unit may be an optical-to-electrical conversion chip, for example, an APD.

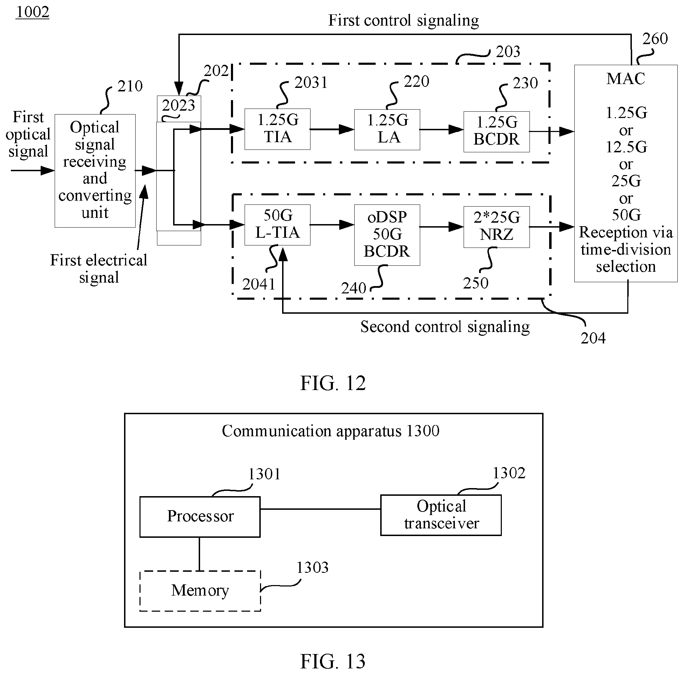

Next, two different structures 1001 and 1002 of the receiving apparatus 1000 in this application are described in detail based on different structures of the channel selection unit 202 with reference to FIG. 11 and FIG. 12.

Specifically, as shown in FIG. 11, an uplink first optical signal is converted into a first electrical signal by using the optical signal receiving and converting unit 210, and is output to the channel selection unit 202. The channel selection unit 202 includes a control unit 2021 and a switching element 2022. Specifically, the control unit 2021 in the channel selection unit 202 receives first control signaling from a MAC, and controls, based on the first control signaling, the single-pole double-throw switch 2022 to input a first signal to different amplification and data recovery channels. The first control signaling may indicate a rate of the first signal, so that the control unit 2021 allocates the first signal to different amplification and data recovery channels based on the rate of the first signal. Alternatively, the first control signaling may directly indicate different amplification and data recovery channels. This is because a control end of the MAC 260 stores rates of signals sent by an ONU device at different moments.

For example, when an uplink first optical signal at a first moment is a first-rate optical signal, for example, is 1.25 Gbps, the optical signal receiving and converting unit converts the first-rate optical signal into a first-rate electrical signal, and outputs the first-rate electrical signal to the channel selection unit 202. The control unit 2021 receives the first control signaling from the MAC, controls, based on the first control signaling, the single-pole double-throw switch 2022 to be connected to the first amplification and data recovery channel 203, and transmits the first-rate electrical signal to the first amplification and data recovery channel 203. The first-rate electrical signal is received by the MAC 260 after successively passing through the LA 220 and the BCDR 230. When an uplink first optical signal at a second moment is a second-rate optical signal, for example, is 50 Gbps, the optical signal receiving and converting unit converts the second-rate optical signal into a second-rate electrical signal, and outputs the second-rate electrical signal to the channel selection unit 202. The control unit 2021 receives the first control signaling from the MAC, controls, based on the first control signaling, the single-pole double-throw switch 2022 to be connected to the second amplification and data recovery channel 204, and transmits the second-rate electrical signal to the second amplification and data recovery channel 204. The second-rate electrical signal is received by the MAC 260 after successively passing through the oDSP and BCDR decision module 240 and the NRZ coding module 250.

In addition, the MAC 260 may control operating rates/operating bandwidths of different amplification and data recovery channels by sending second control signaling to the first amplifier 2031 or the second amplifier 2041. Specifically, when the rate of the first signal is 25 Gbps, the MAC 260 may send the second control signaling to the second amplifier 2041 based on the rate of the first signal, where the second control signaling indicates the second amplifier 2041 to decrease an amplification bandwidth. In an implementation, the second control signaling includes a specified bandwidth value, and indicates the second amplifier 2041 to adjust the amplification bandwidth to the specified bandwidth value. For example, when the specified bandwidth value is 25G, the second amplifier 2041 adjusts the bandwidth to the specified 25G. Alternatively, in another implementation, the second control signaling indicates the second amplifier 2041 to decrease the bandwidth, the second control signaling includes an indication field, and a value of the indication field is a bandwidth value for adjustment by the second amplifier 2041. For example, when the value of the indication field is 25, after receiving the second control signaling, the second amplifier 2041 decreases the bandwidth of 50G by 25G, so that after a decreased bandwidth is adjusted to 25G, amplification and data recovery are performed on the received first signal. Alternatively, in another implementation, the second control signaling only indicates the second amplifier 2041 to decrease the bandwidth, and does not specifically indicate a bandwidth value that needs to be decreased. After receiving the second indication signaling, the second amplifier 2041 needs only to decrease the bandwidth of 50G.

FIG. 12 is a diagram of a structure of an apparatus 1002. The channel selection unit 202 includes a mirroring module 2023. Specifically, the mirroring module 2023 is configured to mirror the first signal to obtain a second signal, and respectively transmit the first signal and the second signal to the first amplification and data recovery channel 203 and the second amplification and data recovery channel 204.

The control end of the MAC 260 may receive, based on an uplink time sequence of an ONT device, an uplink signal on an amplification and data recovery channel that matches the rate of the first signal. For example, when the rate of the first signal is 50 Gbps at a specific moment, although the first signal is transmitted on the first amplification and data recovery channel 203 in addition to the second amplification and data recovery channel 204, the control end of the MAC 260 receives only an uplink signal transmitted on the second amplification and data recovery channel 204.

It should be understood that for descriptions of other parts shown in FIG. 12, correspondingly refer to the related descriptions in FIG. 10 or FIG. 11. Details are not described herein again.

The communication apparatus provided in embodiments of this application is described below in detail with reference to FIG. 13. It should be understood that descriptions of apparatus embodiments correspond to the descriptions of the method embodiments. Therefore, for content that is not described in detail, refer to the foregoing method embodiments. For brevity, some content is not described again.

In embodiments of this application, the signal amplification apparatus 200 or 300 may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that division into the modules in embodiments of this application is an example, and is merely logical function division. In actual implementation, there may be another division manner. An example in which each functional module is obtained through division based on each corresponding function is used below for description.

FIG. 13 is a diagram of a possible structure of a communication apparatus. As shown in FIG. 13, the communication apparatus 1300 includes a processor 1301, an optical transceiver 1302, and a memory 1303. The memory 1303 is optional.

The processor 1301 and the optical transceiver 1302 are configured to implement the methods performed by the apparatus 200 or 300 in FIG. 7 to FIG. 9. In an implementation process, steps of a processing procedure may be performed by using an integrated logic circuit of hardware in the processor 1301 or instructions in a form of software to complete a method performed by a sending device in the foregoing accompanying drawings. The optical transceiver 1302 is configured to receive a first signal sent by a transmitting end, and send the first signal to the processor 1301 for processing.

The memory 1303 may be configured to store instructions, so that the processor 1301 can be configured to perform the steps mentioned in the foregoing figures. Alternatively, the memory 1303 may be configured to store other instructions, to configure a parameter of the processor 1301 to implement a corresponding function.

It should be noted that the apparatus in FIG. 13 may also be configured to perform method steps in variations of embodiments shown in the foregoing accompanying drawings. Details are not described herein again.

Based on the foregoing embodiments, an embodiment of this application further provides a computer-readable storage medium. The storage medium stores a software program. When the software program is read and executed by one or more processors, the method provided in any one or more of the foregoing embodiments may be implemented. The computer-readable storage medium may include any medium that can store program code, such as a USB flash drive, a removable hard disk, a read-only memory, a random access memory, a magnetic disk, or an optical disc.

Based on the foregoing embodiments, an embodiment of this application further provides a chip. The chip includes a processor, configured to implement the function in any one or more of the foregoing embodiments, for example, perform amplification and data recovery on a first signal. Optionally, the chip further includes a memory. The memory is configured to store program instructions and data that are necessary for execution by the processor. The chip may include a chip, or may include a chip and another discrete component.

It is clear that a person skilled in the art can make various modifications and variations to embodiments of this application without departing from the scope of embodiments of this application. Thus, this application is intended to cover these modifications and variations, provided that they fall within the scope of the claims of this application and their equivalent technologies.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on specific applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the solutions provided in this application.

In addition, functional units in embodiments of this application may be integrated into one unit, or each unit may exist alone physically, or two or more units may be integrated into one unit.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semi-conductor medium (for example, a solid-state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A signal amplification apparatus, wherein the apparatus comprises a signal receiving unit, a channel selection unit, a first amplification and data recovery channel, and a second amplification and data recovery channel;
the signal receiving unit is configured to receive a first signal, and output the first signal to the channel selection unit, wherein the first signal comprises a first-rate signal and a second-rate signal;
the channel selection unit is configured to connect the signal receiving unit to at least one of the first amplification and data recovery channel and the second amplification and data recovery channel, and transmit the first signal to the at least one of the first amplification and data recovery channel and the second amplification and data recovery channel;
the first amplification and data recovery channel is configured to perform amplification and data recovery on the first signal transmitted to the first amplification and data recovery channel; and
the second amplification and data recovery channel is configured to perform amplification and data recovery on the first signal transmitted to the second amplification and data recovery channel.

2. The apparatus according to claim 1, wherein the signal receiving unit is specifically configured to receive the first-rate signal and the second-rate signal that arrive at different moments.

3. The apparatus according to claim 1 or 2, wherein
the first amplification and data recovery channel is specifically configured to perform limiting amplification and data recovery on the first-rate signal; and
the second amplification and data recovery channel is specifically configured to perform linear amplification and data recovery on the second-rate signal.

4. The apparatus according to any one of claims 1 to 3, wherein the channel selection unit comprises a control unit and a switching element;
the control unit is configured to receive first control signaling, and control, based on the first control signaling, the switching element to connect the signal receiving unit to the first amplification and data recovery channel or the second amplification and data recovery channel; and
when the switching element connects the signal receiving unit to the first amplification and data recovery channel, the switching element is configured to transmit the first-rate signal to the first amplification and data recovery channel; or
when the switching element connects the signal receiving unit to the second amplification and data recovery channel, the switching element is configured to transmit the second-rate signal to the second amplification and data recovery channel.

5. The apparatus according to claim 4, wherein the switching element comprises a single-pole double-throw switch or a transistor.

6. The apparatus according to claim 4 or 5, wherein the first control signalingis from a medium access control MAC.

7. The apparatus according to claim 1, wherein the channel selection unit comprises a mirroring module; and
the mirroring module is configured to mirror the first signal to obtain a second signal, and respectively transmit the first signal and the second signal to the first amplification and data recovery channel and the second amplification and data recovery channel.

8. The apparatus according to any one of claims 1 to 7, wherein
the first amplification and data recovery channel is further configured to receive second control signaling, and determine an operating rate/operating bandwidth of the first amplification and data recovery channel based on the second control signaling; or
the second amplification and data recovery channel is further configured to receive second control signaling, and determine an operating rate/operating bandwidth of the second amplification and data recovery channel based on the second control signaling.

9. The apparatus according to claim 8, wherein the second control information is from the medium access control MAC.

10. The apparatus according to any one of claims 1 to 9, wherein
the apparatus comprises M amplification and data recovery channels, rates of the first signal comprise N rates, the M amplification and data recovery channels correspond to the N rates, and each of the N rates corresponds to one of the M amplification and data recovery channels; and
the channel selection unit is configured to connect the signal receiving unit to an amplification and data recovery channel corresponding to a rate of the first signal, wherein M and N are integers greater than or equal to 2.

11. An optical signal receiving apparatus, wherein the apparatus comprises an optical signal receiving and converting unit, a channel selection unit, a first amplification and data recovery channel, and a second amplification and data recovery channel;
the optical signal receiving and converting unit is configured to receive a first optical signal, convert the first optical signal into a first electrical signal, and output the first electrical signal to the channel selection unit, wherein the first optical signal comprises a first-rate optical signal and a second-rate optical signal, the first-rate optical signal corresponds to a first-rate electrical signal, and the second-rate optical signal corresponds to a second-rate electrical signal;
the channel selection unit is configured to connect the optical signal receiving and converting unit to at least one of the first amplification and data recovery channel and the second amplification and data recovery channel, and transmit the first electrical signal to the at least one of the first amplification and data recovery channel and the second amplification and data recovery channel;
the first amplification and data recovery channel is configured to perform amplification and data recovery on the first electrical signal transmitted to the first amplification and data recovery channel; and
the second amplification and data recovery channel is configured to perform amplification and data recovery on the first electrical signal transmitted to the second amplification and data recovery channel.

12. The apparatus according to claim 11, wherein
the optical signal receiving and converting unit is specifically configured to receive the first-rate optical signal and the second-rate optical signal that arrive at different moments, convert the first-rate optical signal and the second-rate optical signal into the first-rate electrical signal and the second-rate electrical signal, and separately output the first-rate electrical signal and the second-rate electrical signal to the channel selection unit at different moments.

13. The apparatus according to claim 11 or 12, wherein
the first amplification and data recovery channel is specifically configured to perform limiting amplification and data recovery on the first-rate electrical signal; and
the second amplification and data recovery channel is specifically configured to perform linear amplification and data recovery on the second-rate electrical signal.

14. The apparatus according to any one of claims 11 to 13, wherein the channel selection unit comprises a control unit and a switching element;
the control unit is configured to receive first control signaling, and control, based on the first control signaling, the switching element to connect the optical signal receiving and converting unit to the first amplification and data recovery channel or the second amplification and data recovery channel; and
when the switching element connects the optical signal receiving and converting unit to the first amplification and data recovery channel, the switching element is configured to transmit the first-rate electrical signal to the first amplification and data recovery channel; or
when the switching element connects the optical signal receiving and converting unit to the second amplification and data recovery channel, the switching element is configured to transmit the second-rate electrical signal to the second amplification and data recovery channel.

15. The apparatus according to claim 14, wherein the switching element comprises a single-pole double-throw switch or a transistor.

16. The apparatus according to claim 14 or 15, wherein
the first control information is from a medium access control MAC.

17. The apparatus according to claim 11, wherein the channel selection unit comprises a mirroring module; and
the mirroring module is configured to mirror the first electrical signal to obtain a second electrical signal, and respectively transmit the first electrical signal and the second electrical signal to the first amplification and data recovery channel and the second amplification and data recovery channel.

18. The apparatus according to any one of claims 11 to 17, wherein
the first amplification and data recovery channel is further configured to receive second control signaling, and determine an operating rate/operating bandwidth of the first amplification and data recovery channel based on the second control signaling; or
the second amplification and data recovery channel is further configured to receive second control signaling, and determine an operating rate/operating bandwidth of the second amplification and data recovery channel based on the second control signaling.

19. The apparatus according to claim 18, wherein the second control information is from the medium access control MAC.

20. The apparatus according to any one of claims 11 to 19, wherein
the apparatus comprises M amplification and data recovery channels, the first optical signal or the first electrical signal comprises signals at N rates, the M amplification and data recovery channels correspond to the signals at the N rates, a signal at each of the N rates corresponds to one of the M amplification and data recovery channels, and the M amplification and data recovery channels comprise a limiting amplification and data recovery channel and a linear amplification and data recovery channel; and
the channel selection unit is configured to connect the optical signal receiving and converting unit to an amplification and data recovery channel corresponding to a rate of the first electrical signal, wherein M and N are integers greater than or equal to 2.

21. A signal amplification method, comprising:
receiving a first signal, wherein the first signal comprises a first-rate signal and a second-rate signal;
transmitting the first signal to at least one of a first amplification and data recovery channel and a second amplification and data recovery channel;
performing, by the first amplification and data recovery channel, amplification and data recovery on the first signal when the first signal is transmitted to the first amplification and data recovery channel; and
performing, by the second amplification and data recovery channel, amplification and data recovery on the first signal when the first signal is transmitted to the second amplification and data recovery channel.

22. The method according to claim 21, wherein the receiving a first signal comprises:
receiving the first-rate signal and the second-rate signal that are at different moments.

23. The method according to claim 21 or 22, wherein
the performing, by the first amplification and data recovery channel, amplification and data recovery on the first signal comprises: performing, by the first amplification and data recovery channel, limiting amplification and data recovery on the first signal; and
the performing, by the second amplification and data recovery channel, amplification and data recovery on the first signal comprises: performing, by the second amplification and data recovery channel, linear amplification and data recovery on the first signal.

24. The method according to any one of claims 21 to 23, wherein the method further comprises:
receiving first control signaling; and
transmitting the first signal to the first amplification and data recovery channel or the second amplification and data recovery channel based on the first control signaling.

25. The method according to claim 24, wherein the first control information is from a medium access control MAC.

26. The method according to any one of claims 21 to 23, wherein the method further comprises:
mirroring the first signal to obtain a second signal; and
respectively transmitting the first signal and the second signal to the first amplification and data recovery channel and the second amplification and data recovery channel.

27. The method according to any one of claims 21 to 26, wherein the method further comprises:
receiving second control signaling; and
determining an operating rate/operating bandwidth of the first amplification and data recovery channel or the second amplification and data recovery channel based on the second control signaling.

28. The method according to claim 27, wherein the second control information is from the medium access control MAC.

29. The method according to any one of claims 21 to 28, wherein
rates of the first signal comprise N rates, the N rates correspond to M amplification and data recovery channels, each of the N rates corresponds to one of the M channels, and M and N are integers greater than or equal to 2; and
the first signal is transmitted to a channel corresponding to a rate of the first signal.

30. A passive optical network system, comprising an optical line terminal OLT and a plurality of optical network units ONUs, wherein the OLT and the ONUs communicate through at least one downlink wavelength channel and one uplink wavelength channel, the uplink wavelength channel is used to transmit a first signal, and the OLT is configured to perform the method according to any one of claims 21 to 29.

31. A chip, wherein the chip comprises a processor and an optical signal receiving apparatus, the optical signal receiving apparatus is configured to receive a first signal and transmit the first signal to the processor, and the processor is configured to perform the method according to any one of claims 21 to 29.
